# EUROPEAN PATENT APPLICATION

(11) **EP 3 648 043 A1**
(43) Date of publication of application: **06.05.2020**
(21) Application number: 18206464.2
(22) Date of filing: 15.11.2018
(51) Int. Cl.: G06Q 30/08, G06Q 50/06, G06Q 30/02, G06Q 30/06

(54) **SYSTEM OF MANAGEMENT OF ENERGY TRADING AND METHOD OF THE SAME**

(30) Priority: 02.11.2018 KR 20180133875
(71) Applicant: University - Industry Cooperation Group of Kyung Hee University, Yongin-si, Gyeonggi-do 17104 (KR)
(72) Inventor: HONG, Choong Seon, 17104 Gyeonggi-do (KR); TRAN, Thi Kim Oanh, Yeongtong-gu Suwon-si Gyeonggi-do 16705 (KR); LEE, Min Kyung, 17104 Gyeonggi-do (KR)
(74) Representative: Frenkel, Matthias Alexander

(57) **Abstract**

Disclosed is a system and method for managing energy trading. An energy trading management system includes at least one vehicle configured to be supplied with or supply electrical energy; and an energy trading management apparatus configured to determine a purchase demand and to transmit a bid request and a reserve price to the at least one vehicle based on the determined purchase demand. The vehicle is configured to determine whether to participate in a bid based on the reserve price, and the energy trading management apparatus is configured to determine an amount of electrical energy capable of being supplied from a vehicle that accepts the bid, and to correct the reserve price and determine a new reserve price in response to the amount of electrical energy capable of being supplied exceeding the purchase demand, and to transmit the new reserve price to the vehicle.

## Description

### CROSS-REFERENCE TO RELATED APPLICATIONS

This application claims the benefit under 35 USC § 119(a) of Korean Patent Application No. 10-2018-0133875 filed on November 02, 2018 in the Korean Intellectual Property Office, the entire disclosure of which is incorporated herein by reference for all purposes.

### BACKGROUND

### 1. Field

At least one example embodiment relates to an energy trading management system and an energy trading management method.

### 2. Description of Related Art

A vehicle refers to an apparatus capable of moving to a destination while traveling on a road or a track. In recent years, the vehicle may acquire power used to rotate wheels using electrical energy instead of using thermal energy resulting from combustion of fossil fuel. The vehicle that acquires power using the electrical energy is referred to as an electric vehicle (EV). Examples of the electric vehicle may include a general electric vehicle (EV) that acquires power using only electrical energy, a hybrid electric vehicle (HEV) that uses both electrical energy and thermal energy resulting from combustion of fossil fuel, a plug-in HEV (PHEV) that uses both the electrical energy and the thermal energy and also is embedded with a storage capable of charging electrical energy supplied from an outside, and a hydrogen fuel cell electric vehicle (FCEV) that produces electricity based on a hydrogen fuel cell.

### SUMMARY

At least one example embodiment provides an energy trading management system and method that may supply surplus electrical energy of a vehicle to an entity requiring power.

According to an aspect of at least one example embodiment, there is provided an energy trading management system including at least one vehicle configured to be supplied with or supply electrical energy; and an energy trading management apparatus configured to determine a purchase demand and to transmit a bid request and a reserve price to the at least one vehicle based on the determined purchase demand, wherein the vehicle is configured to determine whether to participate in a bid based on the reserve price, and the energy trading management apparatus is configured to determine an amount of electrical energy capable of being supplied from a vehicle that accepts the bid, and to correct the reserve price and determine a new reserve price in response to the amount of electrical energy capable of being supplied being greater than or equal to the purchase demand, and to transmit the new reserve price to the vehicle.

According to another aspect of at least one example embodiment, there is provided an energy trading management method including transmitting a bid request and a reserve price to at least one vehicle based on a purchase demand; determining, by the at least one vehicle, whether to participate in a bid; determining an amount of electrical energy capable of being supplied from a vehicle that accepts the bid; and correcting the reserve price and determining a new reserve price in response to the amount of electrical energy capable of being supplied from the vehicle that accepts the bid is greater than or equal to the purchase demand, and transmitting the new reserve price to the vehicle.

According to the aforementioned energy trading management system and method, energy trading may be efficiently performed between a vehicle and an entity (hereinafter, a power requiring entity) requiring power, such as a building, etc., and surplus electrical energy of the vehicle may be appropriately supplied to the power requiring entity.

Also, according to the aforementioned energy trading management system and method, a power requiring entity, such as, a building, may be supplied with electrical energy from a parked electric vehicle at relatively low price and the overall energy resources, such as commercial power or renewable energy, available to the power requiring entity may be efficiently managed.

Also, according to the aforementioned energy trading management system and method, a vehicle may sell surplus electrical energy, which may lead to making profits using the vehicle.

Also, according to the aforementioned energy trading management system and method, a power requiring entity may reduce a power demand at a peak time, which may lead to stabilizing supply and demand of power over the whole society and improving corporate profits and social profits together.

Other features and aspects will be apparent from the following detailed description, the drawings, and the claims.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 illustrates an example of an energy trading management system according to an example embodiment;
FIG. 2 is a diagram illustrating an example of an energy trading management system according to an example embodiment;
FIG. 3 is a diagram illustrating an example of a power requiring entity according to an example embodiment;
FIG. 4 is a diagram illustrating an example of an auction processing engine according to an example embodiment;
FIG. 5 is a flowchart illustrating an example of an energy trading management method according to an example embodiment;
FIG. 6 is a flowchart illustrating another example of an energy trading management method according to an example embodiment; and
FIG. 7 is a flowchart illustrating another example of an energy trading management method according to an example embodiment.

### DETAILED DESCRIPTION

Hereinafter, some example embodiments will be described in detail with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

The following detailed structural or functional description of example embodiments is provided as an example only and various alterations and modifications may be made to the example embodiments. Accordingly, the example embodiments are not construed as being limited to the disclosure and should be understood to include all changes, equivalents, and replacements within the technical scope of the disclosure.

Unless the context clearly indicates otherwise, like reference numerals refer to like elements used throughout. Also, components used herein, such as, for example, terms '-unit/module', etc., may be implemented as software and/or hardware. Depending on example embodiments, each component with '-unit/module', etc., may be implemented as a single piece of software, hardware and/or a desired part, and also may be implemented as a plurality of pieces of software, hardware, and/or desired parts.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component. As used herein, the term "and/or" includes any and all combinations of one or more of the associated listed items.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

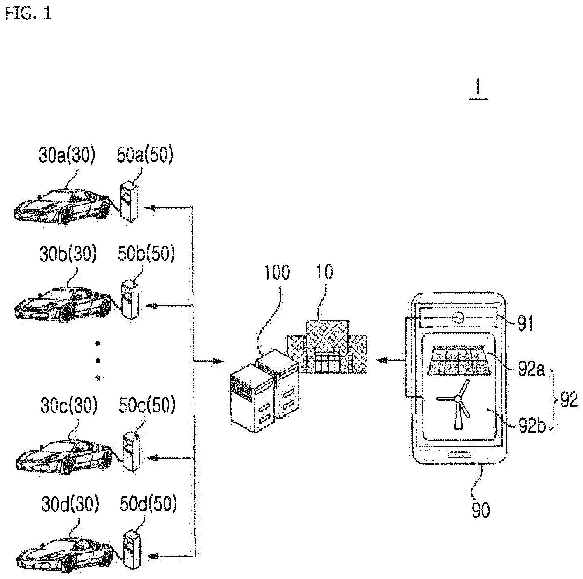

Hereinafter, an energy trading management system and an energy trading management apparatus according to example embodiments will be described with reference to FIGS. 1 to 4.

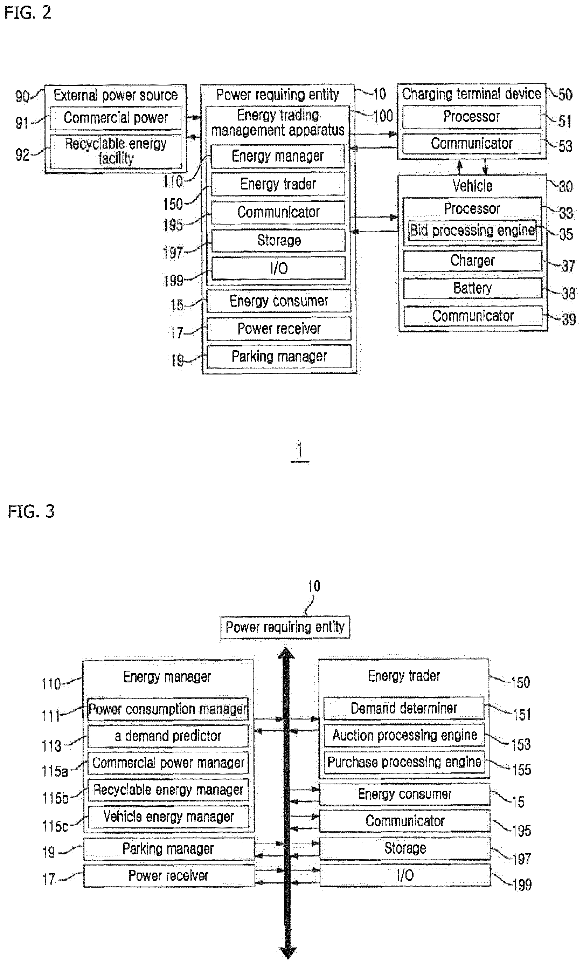

FIG. 1 illustrates an example of an energy trading management system according to an example embodiment, and FIG. 2 is a diagram illustrating an example of an energy trading management system according to an example embodiment.

Referring to FIGS. 1 and 2, an energy trading management system 1 may include a power requiring entity 10 configured to consume power, at least one vehicle 30, at least one charging terminal device 50 configured to electrically connect to the at least one vehicle 30, respectively, an energy trading management apparatus 100 configured to connect to the at least one charging terminal device 50, and an external power source 90 configured to supply power to the power requiring entity 10, etc.

The power requiring entity 10 may include at least one of an electronic device, a machine, a vehicle, a construction, and other facilities that may be supplied with power from at least one of the vehicle 30 and the external power source 90 and may use the supplied power. For example, the power requiring entity 10 may include a building, a factory, a road, a bridge, and a construction such as a park, and may also include other facilities, such as a traffic light and an automatic circuit breaker, mountable thereto. As another example, the power requiring entity 10 may include a power system, such as a micro grid and a smart grid. Further, the power requiring entity 10 may include a computer device, a smartphone, a display device, an electronic product, and various types of mechanical machines, and may also include various types of devices or facilities that use power.

The power requiring entity 10 may include the energy trading management apparatus 100 configured to manage the overall energy acquirement and consumption of the power requiring entity 10 and to manage energy trading related thereto. Also, the power requiring entity 10 may include an energy consumer 15 and, if necessary, may further include a power receiver 17 and a parking manager 19.

The energy trading management apparatus 100 may determine whether it is appropriate to supply power to the power requiring entity 10 based on electrical energy supplied from an outside, for example, the vehicle 30, the charging terminal device 50, and the external power source 90, and may perform energy trading with the vehicle 30 by initiating an action. The energy trading management apparatus 100 may be implemented using, for example, a building energy management system (BEMS) or a small generator counting device. The energy trading management apparatus 100 is further described below.

The energy consumer 15 may include a device, a facility, and the like, configured to consume power. For example, the energy consumer 15 may include various types of devices, such as a charging device, a lighting device, a heating device, a cooling device, an air conditioning device, a pump, an operating device, an inlet or an outlet, and a computer device connected thereto. Supply of electrical energy to the energy consumer 15 may be managed and controlled by an energy manager 110.

The power receiver 17 may receive power from at least one of the vehicle 30, the charging terminal device 50, and the external power source 90. The power received at the power receiver 17 is supplied to the energy consumer 15 and consumed by the energy consumer 15.

The parking manager 19 may manage the overall parking of the vehicle 30. Depending on example embodiments, the parking manager 19 may be configured to be separate from the energy trading management apparatus 100 and may be configured to be integrated with the energy trading management apparatus 100.

When the parking manager 19 is configured to be separate from the energy trading management apparatus 100, the parking manager 19 may be implemented by a predetermined (or, alternatively, desired) processor or a computing device including the same.

According to an example embodiment, the parking manager 19 may collect a variety of information associated with the vehicle 30 and may store and update the collected information in a predetermined (or, alternatively, desired) storage medium, for example, a storage 197. Here, the variety of information associated with the vehicle 30 may include for example, a parking state of the vehicle 30 indicating whether the vehicle 30 is parked or not parked, an identification number of the vehicle 30, an arrival time, a departure time, and a charging state of the vehicle 30, and a total amount of power acquirable from the vehicle(s) 30, and a prediction thereof. The total amount of power may be predicted based on a learning process. The parking manager 19 may acquire the variety of information associated with the vehicle 30 through a variety of mediums, for example, a vehicular recognition camera, the charging terminal device 50, and the vehicle 30. All of or a portion of the information acquired by the parking manager 19 may be transmitted to the energy trading management apparatus 100 and used for energy trading.

The energy trading management system 1 may include one or more vehicles 30, for example, first to fourth vehicles 30a, 30b, 30c, and 30d. The vehicle 30 may be an electric vehicle that is charged with power from the outside and acquires a driving force of the vehicle 30 based on the charged power. The electric vehicle may include, for example, a general electric vehicle, a hybrid electric vehicle (HEV), a plug-in hybrid electric vehicle (PHEV), and a hydrogen fuel cell electric vehicle (FCEV).

Referring to FIG. 2, the vehicle 30 may include a processor 33 installed in the vehicle 30 to perform various types of controls and operations, and a charger 37 configured to perform power charging, a battery 38 configured to store electrical energy, and a communicator 39 configured to communicate with an external apparatus, for example, the charging terminal device 50 and the energy trading management apparatus 100.

The processor 33 is configured to control various operations of the vehicle 30 and to perform various types of operation processing required for the operation of the vehicle 30. The processor 33 may execute an application stored in a storage medium (not shown) to perform various types of operations. Here, the application may be designed by a designer and stored in the storage, and may be acquired or updated through an electronic software distribution network connectable over a wired or wireless communication network.

The processor 33 may include, for example, a central processing unit (CPU), a micro controller unit (MCU), MICOM, an application processor (AP), an electronic control unit (ECU), and other electronic devices capable of performing various types of operation processing and generating a control signal. The devices may be configured using one or more semiconductor chips and relevant parts.

According to an example embodiment, the processor 33 may include a bid processing engine 35. The bid processing engine 35 may be a physical portion of the processor 33 and may also be a logical portion of the processor 33. The bid processing engine 35 may perform various operations associated with energy trading under control of a user or based on settings stored in a storage medium. For example, in response to a bid request from the energy trading management apparatus 100, the bid processing engine 35 may determine whether to participate in a bid.

According to an example embodiment, the bid processing engine 35 may compare a price (hereinafter, a reserve price δ) offered by the energy trading management apparatus 100 and a lowest price (hereinafter, a lowest desired price) at which the vehicle 30, for example, an owner of the vehicle 30 desires to accept the bid and may determine to participate in the bid if the reserve price δ is equal to the lowest desired price or if the reserve price δ is greater than or equal to the lowest desired price. Here, the reserve price δ may include a highest price that the energy trading management apparatus 100 is willing to pay through auction. The lowest desired price may be input in advance based on the intent of a user, for example, the owner of the vehicle 30 or may be input in response to receiving the bid request. The user may input the lowest desired price by controlling an input device, for example, a vehicular audio/video navigation and a voice recognition device, installed in the vehicle 30 and/or by controlling another terminal device, for example, a smartphone, a tablet PC, communicable with the vehicle 30. Also, the lowest desired price may be determined by the bid processing engine 35 based on a variety of pre-stored information, for example, a previous winning price. The bid processing engine 35 may determine an appropriate lowest desired price using, for example, a machine learning.

The bid processing engine 35 may transmit a bid participation signal to the energy trading management apparatus 100. In detail, once the user determines to participate in the bid, the bid processing engine 35 may transmit the bid participation signal and a variety of information, for example, a vehicle number and the lowest desired price, required for the bid to the energy trading management apparatus 100 and may participate in auction. On the contrary, when the user determines not to participate in the bid, the bid processing engine 35 may transmit a bid non-participation signal to the energy trading management apparatus 100 to exclude power of the vehicle 30 from a purchase target.

In addition, if necessary, the bid processing engine 35 may periodically or aperiodically exchange information with the energy trading management apparatus 100 to appropriately perform energy trading.

The charger 37 may charge the battery 38 through boosting or rectifying power. The charger 37 may include, for example, an on-board charger (OBC), a direct current (DC) to DC converter, and a charging device in which the OBC and the DC-DC converter are combined. The charger 37 may include a two-way charger configured to bi-directionally supply electrical energy. That is, the charger 37 may receive electrical energy from the power requiring entity 10, the charging terminal device 50, and the like, and may transmit the electrical energy to the power requiring entity 10, the charging terminal device 50, and the like.

The battery 38 may store power required for operation of the vehicle 30. When the energy trading management apparatus 100 determines to purchase the power from the vehicle 30, the power stored in the battery 38 of the vehicle 30 may be transferred to the power receiver 19 through the charging terminal device 50 and may also be transmitted to the power receiver 19 through a power cable directly connected to the power requiring entity 10 or the energy trading management apparatus 100.

The communicator 39 may transmit a signal or data to at least one of the charging terminal device 50 and the energy trading management apparatus 100 through communication therewith. For example, the communicator 39 may receive a bid request signal, a winning signal, a power transmission request signal, etc., from the energy trading management apparatus 100 and may transmit a bid participation signal, a bid non-participation signal, etc., to the energy trading management apparatus 100 directly or through the charging terminal device 50. The communicator 39 may communicate with an external apparatus, for example, a communicator 53 of the charging terminal device 50 and a communicator 195 of the energy trading management apparatus 100, over a wired communication network, a wireless communication network, or a combination thereof.

The charging terminal device 50 may be connected to the vehicle 30 through a power cable and may supply power to the vehicle 30 and may also be supplied with the power from the vehicle 30. Here, the charging terminal device 50 may be a two-way charging device. Also, the charging terminal device 50 may be electrically connected to at least one of the external power source 90 and the power requiring entity 10 to supply the electrical energy acquired from at least one of the external power source 90 and the energy trading management apparatus 100 to the vehicle 30 and/or to supply the electrical energy from the vehicle 30 to the power requiring entity 10.

Depending on example embodiments, a single vehicle 30, that is, one of the first to fourth vehicles 30a, 30b, 30c, and 30d may be connected to a single charging terminal device 50, that is, one of first to fourth charging terminal devices 50a, 50b, 50c, and 50d. Alternatively, a plurality of vehicles 30, for example, at least two of the first to fourth vehicles 30a, 30b, 30c, and 30d may be connected to a single charging terminal device 50, for example, one of the first to fourth charging terminal devices 50a, 50b, 50c, and 50d.

The charging terminal device 50 may include a processor 51 configured to control an operation of the charging terminal device 50 and, if necessary, may further include the communicator 53 configured to communicate with an external apparatus, for example, the vehicle 30 and the energy trading management apparatus 100.

The processor 51 may control the charging terminal device 50 to appropriately supply power to the vehicle 30, may control an operation of the communicator 53, may determine whether the vehicle 30 is parked based on information associated with a connection state between the charging terminal device 50 and the vehicle 30, and may acquire information on the vehicle 30, for example, information for recognizing the specific vehicle 30 such as a vehicle number.

The communicator 53 may transfer information required for energy trading to the communicator 195 of the power requiring entity 10. Information required for energy trading may include, for example, information on a parking state of the vehicle 30 that is is determined by the processor 51. Information on the parking state of the vehicle 30 indicating whether the vehicle 30 is parked may be transferred to the parking manager 19. Depending on example embodiments, the communicator 53 may relay transmission of a signal between the energy trading management apparatus 100 and the vehicle 30. Similar to the communicator 39, the communicator 53 may communicate with an external apparatus, for example, the communicator 39 and the communicator 195, over a wired communication network, a wireless communication network, or a combination thereof.

The external power source 90 may supply the required power to at least one of the power requiring entity 10, the vehicle 30, and the charging terminal device 50. In this case, the vehicle 30 may be supplied with the power from the external power source 90 through the charging terminal device 50.

The external power source 90 may include a commercial power 91 and/or a recyclable energy facility 92. The commercial power 91 refers to power that is produced at, for example, a power generator and transmitted through a power transmission facility. The commercial power 91 may be produced through a power grid, for example, a smart grid and a micro grid. The recyclable energy facility 92 may produce recyclable energy. Although not illustrated, the recyclable energy facility 92 may include, for example, a solar panel 92a, a wind power generation facility 92b, a hydroelectric power generation facility, a bio-energy generation facility, a geothermal power generation facility, and a solar power generation facility. The recyclable energy facility 92 may be directly installed in the power requiring entity 10, for example, a building.

Hereinafter, the energy trading management apparatus 100 will be further described.

FIG. 3 is a diagram illustrating an example of a power requiring entity according to an example embodiment.

Referring to FIGS. 2 and 3, the energy trading management apparatus 100 may further include the energy manager 110, an energy trader 150, the communicator 195, the storage 197, and an input/output (I/O) 199. At least two of the energy manager 110, the energy trader 150, the energy consumer 15, the communicator 195, the storage 197, the I/O 199, the power receiver 17, and the parking manager 19 may be electrically connected to each other and may transmit and receive data in a form of an electrical signal.

The energy manager 110 may overall manage energy resources associated with the power requiring entity 10 and may perform a control operation. For example, the energy manager 110 may manage consumption of energy resources and supply of energy resources with respect to each energy consumer 15 within the power requiring entity 10. If necessary, the energy manager 110 may manage resources of the entire energy trading management system 1 that includes at least one of the charging terminal device 50 and the vehicle 30 connected to the power requiring entity 10, in addition to the power requiring entity 10.

The energy manager 110 may include a power consumption manager 111 and a demand predictor 113 and, if necessary, may further include at least one of a commercial power manager 115a, a recyclable energy manager 115b, and a vehicle energy manager 115c.

The power consumption manager 111 may manage the overall energy consumption of the power requiring entity 10. In detail, the power consumption manager 111 may monitor an amount of the entire or partial power consumed at the power requiring entity 10 and may control an amount of power consumed, that is, a power consumption amount if necessary. Also, the power consumption manager 111 may collect available energy information from at least one of the vehicle 30 being parked and the external power source 90 and may control an amount of power to be consumed in the power requiring entity 10 based on the collected available energy information.

Also, the power consumption manager 111 may measure an amount of power entirely or partially consumed by the power requiring entity 10 at a specific unit point in time t. The measured information is transferred to the demand predictor 113 and used to predict an amount of power demanded at a next unit point in time (t+1). Here, the next unit point in time (t+1) may be preset by the user or the energy manager 110, and may be defined as a point in time at which a predetermined (or, alternatively, desired) period, for example, 1 second, 10 seconds, 1 minute, 1 hour, and 24 hours, is elapsed from the specific unit point in time t.

If a predetermined (or, alternatively, desired) condition is met, the power consumption manager 111 may control the energy trader 150 to perform energy trading. For example, the power consumption manager 111 may compare an amount of energy acquirable from the external power source 90 to a prediction result of the demand predictor 113. When a demand predicted by the demand predictor 113 is less than an amount of energy acquirable from the external power source 90, the power consumption manager 111 may allow the energy trader 150 to perform energy trading. Here, information on the amount of energy acquirable from the external power source 90 may be provided from at least one of the commercial power manager 115a, the recyclable energy manager 115b, and the vehicle energy manager 115c. As another example, when a price of energy acquirable from the external power source 90 is greater than or equal to a predetermined (or, alternatively, desired) price, or in response to arrival of a predetermined (or, alternatively, desired) time or an energy trading command from the user, the power consumption manager 111 may allow the energy trader 150 to perform energy trading.

The demand predictor 113 may predict an amount of energy, that is, a power consumption amount, entirely or partially demanded by the power requiring entity 10 at the next unit point in time (t+1). For example, the demand predictor 113 may predict an amount of energy to be demanded at the next unit point in time (t+1) based on a history (hereinafter, an energy demand history) in which previous energy demands are recorded. Here, the "previous" may include at least one of previous points in times (t-1), (t-2), etc., prior to the specific unit point in time t. The energy demand history may include information on an amount of energy used previously and may include additional information, for example, weather, a season, a time, a surrounding environment, and other events associated with use of energy. Also, to increase the accuracy of prediction, the demand predictor 113 may further acquire necessary information, for example, a date and weather, through access to an external network.

The demand predictor 113 may perform a machine learning process to predict the amount of energy to be demanded at the next unit point in time (t+1). The machine learning process may be implemented using at least one of, for example, a multi-layered perceptron (MLN), a deep neural network (DNN), a convolutional neural network (CNN), a recurrent neural network (RNN), a deep belief network (DBN), and a deep Q-network.

The commercial power manager 115a may manage the commercial power 91, may transfer information on energy acquirable from the commercial power 91 to the power consumption manager 111, and may predict an amount of energy acquirable from the commercial power 91 at the next unit point in time (t+1) using a learning process.

The recyclable energy manager 115b may manage energy produced by the recyclable energy facility 92, may transfer information on the energy produced by the recyclable energy facility 92 to the power consumption manager 111, and may predict an amount of energy to be produced by the recyclable energy facility 92 at the next unit point in time (t+1).

When an amount of energy acquired from one or both of the commercial power manager 115a and the recyclable energy manager 115b does not meet the energy demand of the power requiring entity 10, the power consumption manager 111 may request the energy trader 150 to initiate the auction and to acquire energy from the vehicle 30.

The vehicle energy manager 115c may manage electrical energy provided from the vehicle 30. For example, the vehicle energy manager 115c may measure or predict an amount of electrical energy capable of being supplied from a specific vehicle, for example, the first vehicle 30a and may transmit the measured or predicted amount of electrical energy to the power consumption manager 111 or the energy trader 150. When an amount of electrical energy capable of being supplied from the first vehicle 30a is less than an amount of power required, the energy trader 150 may determine to further acquire power from another vehicle, for example, the second vehicle 30b.

The energy trader 150 may initiate energy trading in response to a control signal of the energy manager 110, based on settings, or in response to an instruction or a command of the user, and may perform auction and energy purchase processing for energy trading. The auction and energy purchase processing for energy trading may be automatically performed.

According to an example embodiment, the energy trader 150 may include a demand determiner 151, an auction processing engine 153, and a purchase processing engine 155.

The demand determiner 151 may determine an amount of power demanded to be purchased (hereinafter, also referred to as a purchase demand), for example, a total amount of electrical energy required to be purchased, at the next unit point in time (t+1). For example, the demand determiner 151 may determine the purchase demand by subtracting a total amount of energy capable of being supplied from the external power source 90 at the next unit point in time (t+1) from a power consumption amount at the next unit point in time (t+1) predicted by the demand predictor 113. The determined purchase demand is transmitted to the auction processing engine 151.

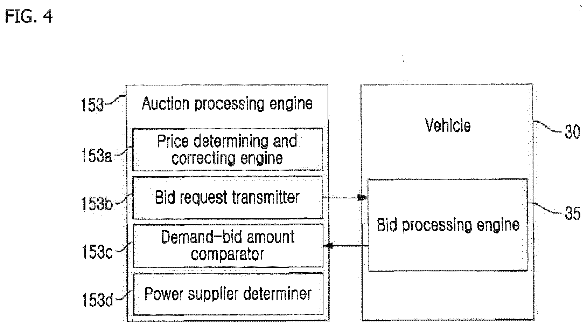

FIG. 4 illustrates an example of an auction processing engine according to an example embodiment.

The auction processing engine 153 initiates and proceeds with auction based on settings or under control of the user. For example, if a purchase demand is greater than or equal to a predetermined (or, alternatively, desired) range, for example, a value above zero, the auction processing engine 151 may automatically initiate the auction. Depending on example embodiments, the auction processing engine 151 may also initiate the auction in response to an instruction of the power consumption manager 111 or the user. The auction processing engine 153 may proceed with the auction using at least one of various auction methods, for example, a bidding method, a Vickrey method, and a reverse auction method.

Referring to FIG. 4, the auction processing engine 153 may include a price determining and correcting engine 153a, a bid request transmitter 153b, a demand-bid amount comparator 153c, and a power supplier determiner 153d.

The price determining and correcting engine 153a determines an initial reserve price δ. The initial reserve price δ may be a price selected by a manager of the power requiring entity 10, may be a previous reserve price δ used prior to initiating the auction, or may be a final price, that is, a winning price. Additionally, the reserve price δ may be determined by the price determining and correcting engine 153a using a learning process based on existing information before or at the same time at which the auction is initiated.

Once the reserve price δ is determined, the bid request transmitter 153b may transmit a bid request and the reserve price δ to at least one parked vehicle 30, for example, at least one of the first to fourth vehicles 30a, 30b, 30c, and 30d, to request the auction. As described above, the bid processing engine 35 of each vehicle 30 may determine whether to participate in a bid based on the bid request and the reserve price δ. For example, when the reserve price δ is greater than or equal to a lowest desired price, the bid processing engine 35 may determine to participate in the energy auction. In this case, at least one vehicle 30, for example, the first to fourth vehicles 30a, 30b, 30c, and 30d may transmit a bid participation signal and information required for the bid to the auction processing engine 153. Otherwise, that is, when the bid processing engine 35 determines not to participate in the auction, the at least one vehicle 30 does not transmit the bid participation signal or transmits a bid non-participation signal.

When the auction processing engine 153 does not receive the bid participation signal from any of the vehicles 30, the auction processing engine 153 notifies the energy manager 110 of this failure in receiving the bid participation signal and the energy manager 110 suspends acquiring of electrical energy from the at least one vehicle 30, for example, the first to fourth vehicles 30a to 30d and purchases electrical energy from the external power source 90.

On the contrary, when the auction processing engine 153 receives the bid participation signal, the demand-bid amount comparator 153c of the auction processing engine 153 may determine a total amount of electrical energy capable of being supplied from all of the vehicles 30 that transmit the bid participation signal and may determine whether the determined total amount of electrical energy is greater than or equal to the purchase demand. When the determined total amount of electrical energy does not exceed the purchase demand, that is, when a total supply energy amount does not meet the entire purchase demand, the purchase processing engine 155 of the energy trader 150 purchases the electrical energy from all of the vehicles 30 that transmit the bid participation signal. An insufficient amount of the purchase demand may be purchased from the external power source 90 using the energy manager 110. On the contrary, when the total amount of electrical energy is greater than or equal to the purchase demand, that is, when the total supply energy amount sufficiently meets the entire purchase demand, the demand-bid amount comparator 153c may notify the price determining and correcting engine 153a of the event. In response thereto, the price determining and correcting engine 153a corrects the reserve price δ. For example, the price determining and correcting engine 153a may determine a new reserve price δ' by subtracting a predetermined (or, alternatively, desired) value ε from the reserve price δ. That is, the price determining and correcting engine 153a may determine the new reserve price δ' using δ' = δ - ε. Here, the value ε may be a fixed value or a variable value. The value ε may be determined by the energy trading management apparatus 100 or the manager.

Once the new reserve price δ' is determined, the price determining and correcting engine 153a transfers the new reserve price δ' to the bid request transmitter 153b and the bid request transmitter 153b transmits the new reserve price δ' to the at least one vehicle 30, for example, at least one of the first to fourth vehicles 30a to 30d. Here, the at least one vehicle 30 may include only the vehicle 30 having transmitted the bid participation signal in the previous operation. The bid processing engine 35 of each vehicle 30 determines whether to participate in the auction, which is described above. Once the bid processing engine 35 determines to participate in the auction, the bid processing engine 35 transmits again the bid participation signal to the auction processing engine 153. As described above, the demand-bid amount comparator 153c may determine a total amount of electrical energy capable of being supplied from all of the vehicles 30 that transmit the bid participation signal and may determine again whether the determined total amount of electrical energy is greater than or equal to the purchase demand. When the total amount of electrical energy is less than the purchase demand, the purchase processing engine 155 purchases the electrical energy from all of the vehicles that transmit the bid participation signal in response to receiving the new reserve price δ'. On the contrary, when the determined total amount of electrical energy is greater than or equal to the purchase demand, the aforementioned process is repeated in such a manner that the price determining and correcting engine 153a determines another new reserve price δ" and the bid request transmitter 153b transmits the new reserve price δ" to the vehicle 30. The above process may be repeated until a preset number N of vehicles 30 are selected.

The power supplier determiner 153d determines the N number of vehicles 30 finally selected during the process as the vehicle 30 of priority order from which power is to be purchased as a priority vehicle. Here, N may be 1 and the first vehicle 30a may be determined as the priority vehicle. If necessary, the power supplier determiner 153d may determine a secondary priority vehicle. For example, the power supplier determiner 153d may determine the vehicle 30, for example, the second vehicle 30b, having transmitted the bid participation signal just before the priority vehicle is determined and having not transmitted the bid participation signal when the priority vehicle is determined.

Once the vehicle 30, for example, the first vehicle 30a, from which power is to be purchased is determined, information on the determined reserve price δ and the first vehicle 30a is transmitted to the purchase processing engine 155. The purchase processing engine 155 determines a final price and purchases the power from the first vehicle 30a based on the final price. In this case, the purchase processing engine 155 may determine the reserve price δ as the final price, may determine a lowest desired price of the secondary priority vehicle, for example, the second vehicle 30b, as the final price using a Vickery method, and may also determine, as the final price, a reserve price δ' (δ'=δ"+ε) offered before a last reserve price δ".

When an amount of electrical energy purchasable from the first vehicle 30a is less than the purchase demand, the purchase processing engine 155 may additionally purchase an insufficient amount of electrical energy from the secondary priority vehicle, for example, the second vehicle 30b. In this case, the purchase processing engine 155 may use the lowest desired price of the secondary priority vehicle or may determine the reserve price δ' offered just before the last reserve price δ" as a purchase price.

The electrical energy of the first vehicle 30a is provided to the power requiring entity 10 through the power receiver 17 simultaneously or sequentially with processing the energy purchase by the purchase processing engine 155. The vehicle energy manager 115c may manage transmission of power from the first vehicle 30a.

The communicator 195 communicates with at least one of the communicator 39 of the vehicle 30 and the communicator 53 of the charging terminal device 50 over a wired communication network, a wireless communication network, or a combination thereof. The communicator 195 may receive information or a signal, for example, a bid participation signal, required for the auction from the processors 39 and 53, and may transmit a bid request signal, a winning signal, a power transmission request signal, and information on the reserve price δ or the final price to the processors 39 and 53.

The storage 197 may store a variety of information required for operation of the energy trading management apparatus 100 and an application. For example, the storage 197 may store an amount of power demanded at the next unit point in time (t+1), the reserve price δ, information on the vehicle 30 that accepts the bid, information on the vehicle 30a that is a successful bidder, the final price, and information on the secondary priority vehicle, for example, the second vehicle 30b and the third vehicle 30c. Also, the storage 197 may store at least one algorithm to be used for the learning process. The energy manager 110 or the energy trader 150 may perform the aforementioned auction process using information and/or the application stored in the storage 197.

The I/O 199 may receive a variety of information required for operation of the energy trading management apparatus 100 or a command, and may output information on the auction process or result. For example, the I/O 199 may receive an auction initiation command from the user of the energy trading management system 1 and may also receive at least one of the initial reserve price δ and the value ε to be subtracted. The I/O 199 may output information on a bidding result, for example, the final price and information on the selected vehicle 30, whether to initiate power supply from the selected vehicle 30, for example, the first vehicle 30a, whether the supply is a failure, whether purchase of electrical energy is completed, and whether to use the external power source 90 aside from the selected vehicle 30, whether the power supply is completed, and statistical and analytical results to the outside using at least one of a visual method and an auditory method.

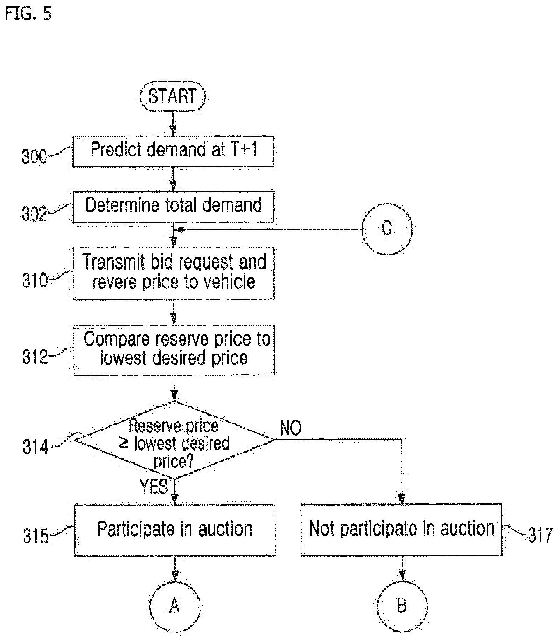

Hereinafter, an energy trading management method according to an example embodiment will be described with reference to FIGS. 5 to 7.

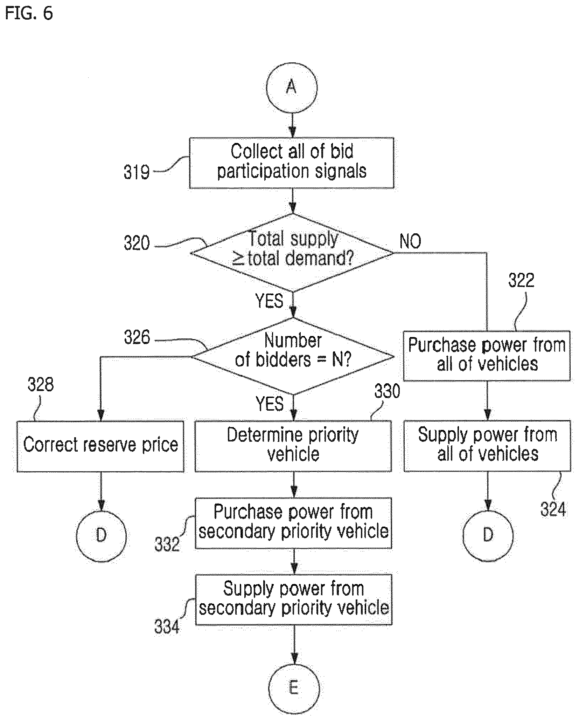

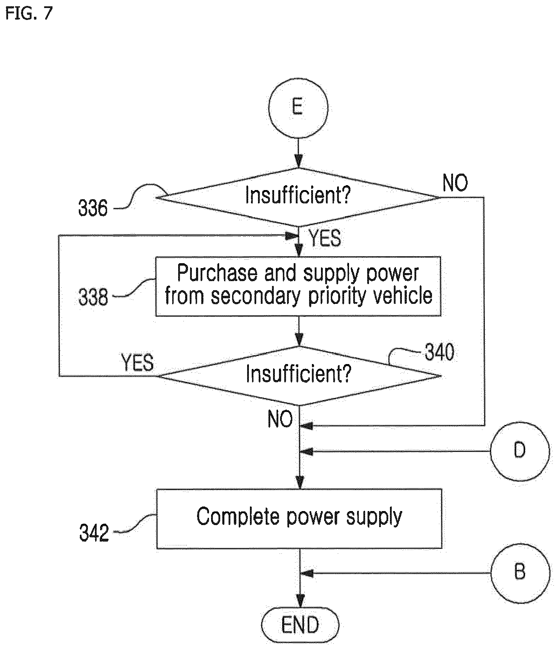

FIG. 5 is a flowchart illustrating an example of an energy trading management method according to an example embodiment, FIG. 6 is a flowchart illustrating another example of the energy trading management method according to an example embodiment, and FIG. 7 is a flowchart illustrating another example of the energy trading management method according to an example embodiment.

Referring to FIG. 5, in operation 300, a power supply amount and an amount of power demanded at a specific unit point in time (t+1) are predicted using a machine learning and the like. Operation 300 is performed based on information on demand and supply at previous points in times t, t-1, t-2, etc., before the specific unit point in time (t+1).

In operation 302, a purchase demand at a next unit point time (t+1) is sequentially determined. The purchase demand may be determined by subtracting a total amount of electrical energy capable of being supplied at the specific unit point in time (t+1) from a power consumption amount at the specific unit point in time (t+1).

In operation 310, a bid request and a reserve price are transmitted to at least one vehicle, for example, an electric vehicle, etc., associated with a power requiring entity. For example, when the power requiring entity is a building, the bid request and the reserve price are transmitted to at least one vehicle that is parked in a parking lot of the building.

In operation 312, the at least one vehicle compares the reserve price and a lowest desired price. When the reserve price is greater than or equal to the lowest desired price in operation 314, the at least one vehicle determines to participate in auction in operation 315. When the at least one vehicle determines to participate in the auction in operation 315, the at least one vehicle transmits a bid participation signal and information required for the bid to an energy trading management apparatus of the power requiring entity. On the contrary, when the reserve price is less than the lowest desired price, the vehicle determines not to participate in the auction in operation 317. The auction process does not proceed with respect to the vehicle that determines not to participate in the auction.

Referring to FIG. 6, in operation 319, in response to the bid participation signal received from each of the at least one vehicle that determines to participate in the auction, the energy trading management apparatus receives and collects all of the bid participation signals. If the energy trading management apparatus fails to receive any of the bid participation signals, the energy trading management apparatus purchases electrical energy from an external power source.

In operation 320, the energy trading management apparatus determines a total amount of electrical energy capable of being supplied from the at least one vehicle and determines whether the determined total amount of electrical energy is greater than or equal to the purchase demand. Unless the determined total amount of electrical energy is greater than or equal to the purchase demand in operation 320, the energy trading management apparatus purchases electrical energy from all of the vehicles that participate in the bid in operation 322 and starts to be supplied with power from all of the vehicles in operation 324. Unless another command is not received, this process may proceed until the power supply is completed in operation 342.

When the determined total amount of electrical energy is greater than or equal to the purchase demand in operation 320 and when a number of bidders is not N, for example, 1 in operation 326, the energy trading management apparatus corrects the reserve price in operation 328. For example, the energy trading management apparatus may determine a new reserve price by subtracting a predetermined (or, alternatively, desired) value from the reserve price. Once the new reserve price is determined, the aforementioned operations 310 through 326 are repeated using the new reserve price. That is, the energy trading management apparatus transmits the new reserve price to the at least one vehicle in operation 310, each of the at least one vehicle determines whether to participate in the bid through operations 312 through 317, the energy trading management apparatus collects all the bid participation signals in operation 319, and compares the total amount of electrical energy to the purchase demand and determines whether the determined total amount of electrical energy is greater than or equal to the purchase demand in operation 320. Unless the determined total amount of electrical energy exceeds the purchase demand, the energy trading management apparatus purchases the electrical energy from all of the vehicles that participate in the bid based on the new reserve price in operation 322. In operation 326, the energy trading management apparatus determines whether the number of bidders is N.

When the determined total amount of electrical energy is greater than or equal to the purchase demand in operation 320 and when the number of bidders, that is, the number of vehicles = N in operation 326, the energy trading management apparatus determines the corresponding vehicle as a priority vehicle in operation 330 and purchases power from the priority vehicle in operation 332. In operation 334, the power is supplied from the priority vehicle to the power requiring entity.

Referring to FIG. 7, when an amount of power capable of being supplied from the priority vehicle is less than the purchase demand in operation 336, an insufficient amount of power is purchased from a separately determined secondary priority vehicle and supplied from the secondary priority vehicle sequentially or simultaneously in operation 338. When the purchase demand is still insufficient even with the amount of power supplied from the secondary priority vehicle in operation 340, a still insufficient amount of may be purposed and supplied from a secondary priority vehicle of the secondary priority vehicle in operation 338. The above purchase process may be performed sequentially based on priority orders of vehicles. Depending on example embodiments, the energy trading management apparatus may purchase power from another external power source instead of purchasing the power from the secondary priority vehicle.

In operation 342, the power supply from the priority vehicle may continue until the power supply is completed. Here, the power supply may include the power supply from the secondary priority vehicle or the power supply from the external power source.

At least one of the energy trading management method and the purchase demand prediction process according to the example embodiments may be implemented in a form of a program executable by a computer apparatus. The program may be recorded in a recording medium, such as, for example, a computer-readable magnetic disc storage device and a semiconductor storage device.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An energy trading management system comprising:
at least one vehicle configured to be supplied with or supply electrical energy; and
an energy trading management apparatus configured to determine a purchase demand and to transmit a bid request and a reserve price to the at least one vehicle based on the determined purchase demand,
wherein the vehicle is configured to determine whether to participate in a bid based on the reserve price, and
the energy trading management apparatus is configured to determine an amount of electrical energy capable of being supplied from a vehicle that accepts the bid, and to correct the reserve price and determine a new reserve price in response to the amount of electrical energy capable of being supplied being greater than or equal to the purchase demand, and to transmit the new reserve price to the vehicle.

2. The system of claim 1, wherein the vehicle is configured to compare the reserve price and a lowest desired price, and to determine to participate in the bid in response to the reserve price being greater than or equal to the lowest desired price.

3. The system of claim 1 or 2, wherein the energy trading management apparatus is configured to determine to purchase electrical energy from all the vehicles that accept the bid in response to the purchase demand being greater than or equal to the amount of electrical energy capable of being supplied.

4. The system of any one of claims 1 to 3, wherein the energy trading management apparatus is configured to determine a vehicle that accepts the bid as a priority vehicle and to determine to purchase the electrical energy from the priority vehicle in response to the amount of electrical energy capable of being supplied being greater than or equal to the purchase demand and a number of vehicles that accept the bid being equal to a preset value.

5. The system of claim 4, wherein the energy trading management apparatus is configured to determine to purchase electrical energy from a secondary priority vehicle in response to an amount of electrical energy capable of being supplied from the priority vehicle being less than the purchase demand.

6. The system of any one of claims 1 to 5, wherein the energy trading management apparatus is configured to determine the purchase demand by subtracting an amount of energy to be supplied from an external power source from a power consumption amount.

7. The system of claim 6, wherein the energy trading management apparatus is configured to predict the power consumption amount and an amount of energy to be supplied from the external power source in a consumption amount using a machine learning.

8. The system of any one of claims 1 to 7, wherein the vehicle is configured to determine again whether to participate in the bid based on the new reserve price.

9. An energy trading management method comprising:
transmitting a bid request and a reserve price to at least one vehicle based on a purchase demand;
determining, by the at least one vehicle, whether to participate in a bid;
determining an amount of electrical energy capable of being supplied from a vehicle that accepts the bid; and
correcting the reserve price and determining a new reserve price in response to the amount of electrical energy capable of being supplied from the vehicle that accepts the bid being greater than or equal to the purchase demand, and transmitting the new reserve price to the vehicle.

10. The method of claim 9, wherein the determining whether to participate in the bid comprises comparing the reserve price and a lowest desired price, and determining to participate in the bid in response to the reserve price being greater than or equal to the lowest desired price.

11. The method of claim 9 or 10, further comprising:
determining to purchase electrical energy from all the vehicles that accept the bid in response to the purchase demand being greater than or equal to the amount of electrical energy capable of being supplied.

12. The method of any one of claims 9 to 11, further comprising:
determining a vehicle that accepts the bid as a priority vehicle and determining to purchase the electrical energy from the priority vehicle in response to the amount of electrical energy capable of being supplied being greater than or equal to the purchase demand and a number of vehicles that accept the bid being equal to a preset value.

13. The method of claim 12, further comprising:
determining to purchase electrical energy from a secondary priority vehicle in response to an amount of electrical energy capable of being supplied from the priority vehicle being less than the purchase demand.

14. The method of any one of claims 9 to 13, further comprising:
determining the purchase demand by subtracting an amount of energy to be supplied from an external power source from a power consumption amount; and
predicting the power consumption amount and an amount of energy to be supplied from the external power source in a consumption amount using a machine learning.

15. The method of any one of claims 9 to 14, further comprising:
determining, by the vehicle, again, whether to participate in the bid based on the new reserve price.
